# EUROPEAN PATENT APPLICATION

(11) **EP 1 095 963 A1**
(43) Date of publication of application: **02.05.2001**
(21) Application number: 00123223.0
(22) Date of filing: 26.10.2000
(51) Int. Cl.: C08J 5/18, A01G 9/14

(54) **Transparent synthetic film suitable to be used as a cover in agriculture, particularly in greenhouse cultivation, and relative production method**

(30) Priority: 29.10.1999 IT UD990200
(71) Applicant: Pati SpA, 31020 San Zenone Degli Ezzelini (TV) (IT)
(72) Inventor: Zanon, Maurizio, 31044 Montebelluna (TV) (IT)
(74) Representative: Petraz, Gilberto Luigi

(57) **Abstract**

Synthetic film suitable to be used in agriculture, advantageously as a cover in greenhouse cultivation, and relative production method, said synthetic film comprising a base layer consisting of at least two heterogeneous polymers having different molecular structures which cannot be combined from a molecular point of view, but which can be amalgamated due to their rheological characteristics, said method providing to set each of said heterogeneous polymers moving towards an extrusion head (22) of an extrusion device (11) by feed means (14) provided with heating means suitable to heat said polymers to a particular temperature, near the melting temperature of the polymer which has the lower melting point.

## Description

### FIELD OF THE INVENTION

This invention concerns a transparent synthetic film suitable to be used in agriculture, advantageously as a cover in greenhouse cultivation. The invention also comprises the relative method to make the film.

### BACKGROUND OF THE INVENTION

Conventional covers for greenhouses, whether they be with a domed or a ridged roof, can be divided into rigid or flexible covers. The first are normally made of glass, polyester reinforced with glass fiber (FGRP), corrugated rigid polyvinyl chloride (PVC), polymethyl methacrylate (PMMA) or polycarbonate (PC), and are usually a few millimetres thick. The second are made of plastified PVC, thermoplastic polyurethane (TPU), ethylene vinyl acetate copolymers (EVA/C), low density polyethylene (LDPE) or ethylene-tetrafluoro-ethylene copolymers (ETFE), and are several tenths of a millimeter thick.

In all cases, the characteristics which each product must have are: mechanical resistance, including resistance to stresses from atmospheric agents and bad weather, to provide adequate protection to the crops underneath; light transmittancy of solar radiations, especially in the field of chlorophyll photosynthesis, also known as PAR (Photosynthetic Activity Radiation); the greenhouse effect, that is the ability to transmit and/or filter bands in the range of infrared radiation relevant for the heat exchange between the outside and inside environment (for example absorption in the long infrared band, 7,000-13,000 nm); and finally the product must be long-lasting, particularly to withstand the deterioration of the components due to exposure to the sun.

Flexible covering is well-known to be less expensive than rigid covering; it needs less investment for the supporting infrastructure, and is easier to apply.

The choice of the base material to make synthetic film to cover greenhouses is therefore very important, because various requirements have to be combined, which may be contradictory. For example, mechanical resistance can be improved by increasing the thickness of the film, but to the detriment of transmittancy. Moreover, given the same thickness, and again as an example, the greenhouse effect of plastified PVC is more than double that of LDPE.

The state of the art includes a film made of LDPE or EVA/C with the addition of so-called "thermal salts", typically silicates or silico-alluminates, which through refraction or diffraction of the sun's rays, prevent or limit any direct radiance of the plants underneath, thus preventing them from burning. However, these salts weaken the structure of the film, and, given the same thickness, reduce the mechanical resistance thereof.

The state of the art also includes a film comprising a layer based on polymeric material in which gas bubbles are dispersed. This film is the subject of the Italian patent IT-A-1.282.215, which corresponds to the international application WO-A-97/20887 published under the PCT. It has an average mechanical resistance lower than that of films made with the same basic polymers and the same surface basic weight. Moreover, the high radiation absorption in the short infrared band reduces the heat introduced into the greenhouse in a manner which is incompatible with the needs of some crops. The same observation applies for the almost total absorption of the UV band.

The state of the art also includes multi-layer films, with different materials for the different layers, in order to increase mechanical resistance; however, this is to the detriment of the light transmittancy.

The state of the art also includes the patent application WO-A-94/05727 which teaches to insert solid particles into the film, such as foils of mica, which are able to selectively reflect the sun's light. However, these solid insertions have the disadvantage that they weaken the film because the polymer matrix is interrupted or the migration is facilitated of plant protection products into the thickness of the film itself, which thus deteriorates more rapidly.

The state of the art also includes a mechanical intervention on at least one of the surfaces of the film, by crimping procedures or by creating knurls, or other surface effects which modify the regularity thereof, passing the films through appropriate calenders, even though on the one hand these mechanical operations require very expensive equipment and on the other hand are difficult to perform on films which are wider than 4-5 meters.

The prior art also comprises the following documents:
JP-A-54-148829, which discloses a resin composition for extrusion laminate, wherein a polypropylene of 0.5-20 g/10 min melt index as propylene homopolymer or copolymer thereof with other olefin monomers is incorporated with 5-15 wt% of a low-density polyethylene with a density of less than 0.93 melt index of 2-15 g/10 min, and melt flow index ratio of 8-13 and they are melt kneaded in the air so that they are modified to a composition with a melt flow index of 9.0-12.5;
JP-A-57-187332, which discloses a heat retaining resin film for agricultural use, wherein a resin composition is obtained by blending 1-20 pts. wt. of polyethylene terephthalate or polybutylene terephthalate in 100 pts. wt. of olefin or styrene resins;
JP-A-09-183871, which discloses a polyolefin resin composition and film or sheet made from the same, wherein the resin composition is produced by mixing 100 pts. wt. of polypropylene and 10-800 pts. wt. of polyethylene, and wherein the MFR of polypropylene is 1-10 g/10 min, the polyethylene has (Mw/Mn) of ≤3, density of ≥0.870 g/cm³ and 1.0-5 g/10 min of MFR. There is provided the extruding with a radical generator, mixing the extruded product with antioxidant and extruding again;
JP-A-08-048824, which discloses a polyolefin composition used for e.g. film for food packaging, wherein such composition consists of 50-97 wt.% of at least one of ethylenic copolymer selected from ethylene-vinyl acetate copolymer (EVA/C) ethylene-methyl methacrylate copolymer, ethylene-methyl acrylate copolymer and ethylene-ethyl acrylate copolymer, and 50-3 wt.% of syndiotactic polypropylene;
JP-A-54-155272, which discloses a highly oriented film for packaging, agriculture, hygienics and decoration produced from blend of EVA/C, olefin copolymer thermoplastic elastomer and polyamide;
JP-A-07-095826, which discloses a gas-permeable vinyl chloride type resin film made of a composition comprising 100 pts. wt. of a vinyl chloride resin base material and 0.05-3.0 pts. wt. of fine particles of a silicone of an average grain size 1-50 microns;
JP-A-63-193823, which discloses a stretched film of low thermal deformation factor and high gas barrier properties, wherein a mixture of resin composed of 65-90 wt.% PA resin and 10-35 wt.% EVOH resin is melted, kneaded and extruded in a tubular state. The extruded tubular film is quenched immediately and the tubular film of crystallinity of 13% or lower is formed.

### SUMMARY OF THE INVENTION

The synthetic film according to the invention and the relative production method are set forth and characterized in the respective main claims, while the dependent claims describe other innovative characteristics of the invention.

One purpose of the invention is to achieve a flexible synthetic film wherein it is possible to regulate the spectrophotometric characteristics and the effects of diffusing or limiting the light without interrupting the polymer matrix of the film itself.

In accordance with this purpose, the film according to the invention is made by combining and mixing together at least two heterogeneous polymers with different molecular structures which cannot be combined together from a molecular point of view, but which can be amalgamated because of their rheological characteristics.

By heterogeneous polymers we mean those belonging to different classes, provided they are not able to react chemically or, if they belong to the same chemical class, have clearly different rheological characteristics, for example because they have very different average molecular weights or because they change their steric conformations.

According to another characteristic of the invention, by using the suitable extrusion conditions and "air-bubble filming", according to a conventional technique, we obtain a film, single layer or multi-layer according to the technology chosen, wherein the light transmission is not uniform, but can be varied within random dimensional areas and forms, because of the different refraction indices according to the local ratio between the two or more polymers.

In particular, the extrusion conditions, taken to mean the combination of the screw profile, the shear rate and the profile of the extrusion temperature, must be such that they do not cause the formation of separate phases consisting of each of the pure polymers (which for reasons of convenience we shall call here polymer "A" and polymer "B"), since the separation surfaces between the phases constitute areas of preferential breakage, but rather enriched domains of the polymer A or B with gradients of concentration, but without lines and surfaces of phase separation, or local variations in thickness more accentuated than those normally found in conventional films produced using the bubble extrusion technology.

The binary mixtures of polymers, to which various additives are normally added such as sliding agents, anti-static, anti-drip and UV stabilizers, are composed of percentages of polymer A varying from 10 to 90%, preferably from 20 to 80%, and of polymer B from 90 to 10%, preferably from 80 to 20%.

The melting temperature of the polymers A and B must be different, but the difference must advantageously be between 5 and 50°K, preferably between 10 and 40°K.

The rheological characteristics of the polymers A and B described by the respective MFI ("Melt Flow Index") or by curves of "apparent viscosity according to the shear rate", must be such that the ratio of the indices or the apparent viscosity values is between 1 and 100 and preferably between 1.5 and 20.

According to another characteristic of the invention, the films according to the invention can be obtained with normal mono-layer bubble extrusion plants, or co-extrusion plants, without modifications and provided that there is sufficient flexibility in the processing conditions, speed of rotation of the screw or screws and temperature profiles, so that they can be adapted to the formula characteristics of the mixture of polymers chosen.

### BRIEF DESCRIPTION OF THE DRAWING

These and other characteristics of the invention will become clear from the following description of a preferred form of embodiment of a plant to produce a film according to the invention, given as a non-restrictive example with reference to the attached drawing, which shows a schematic view of the plant.

### DETAILED DESCRIPTION OF A PREFERRED FORM OF EMBODIMENT OF A PLANT TO PRODUCE A FILM ACCORDING TO THE INVENTION

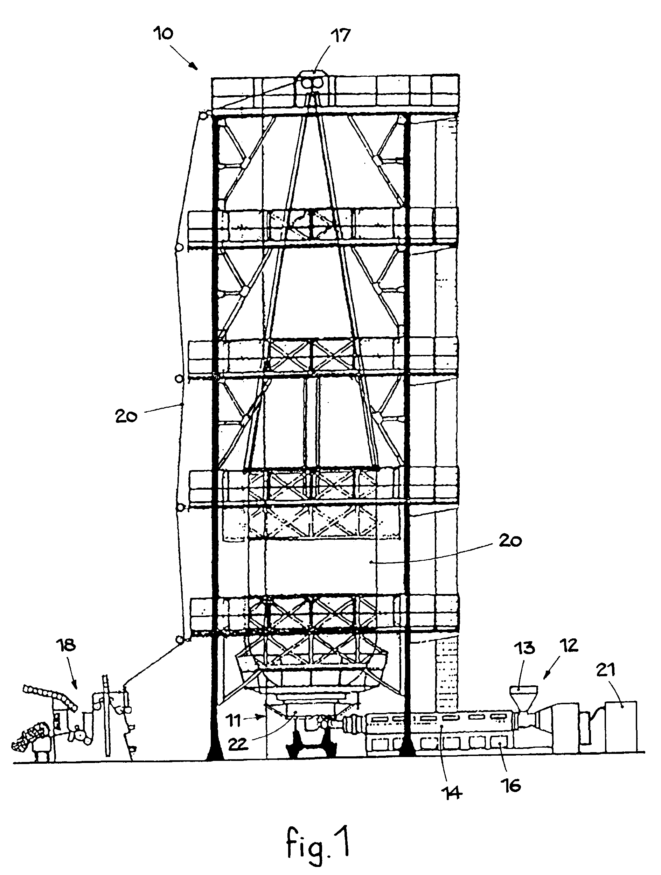

With reference to Fig. 1, a plant 10 to produce a synthetic film 20 according to the invention comprises a conventional extrusion device 11, for example of the type described in the afore-mentioned patent IT-A-1.282.215, with a system 12 to proportion at least two individual heterogeneous polymers A and B.

The proportioning system 12 can be of the volumetric or weight type, so as to be able to obtain the preselected ratios, in the range of proportions detailed above, that is, from 10 to 90% and respectively from 90 to 10% of one with respect to the other, both for the granules of the polymers A and B, and also for any possible additives.

The proportioning system 12 is also suitable to proportion, if necessary, a third polymer C or other polymers N.

The granules of the basic polymers and of the compounds or masterbatches containing the additives can optionally be subjected to a partial premixing in a hopper 13, which is suitable to feed the feed section of a cylindrical extruder 14 of the extrusion device 11.

In the event that a co-extrusion method is used, that is, with more than one cylindrical extruder 14, for each cylindrical extruder 14 used there will obviously be an associated proportioning system 12.

In a typical case, in the feed section of the cylindrical extruder 14 the temperature at the wall is kept near that of the polymer with the lowest melting point. In this zone, the granules begin to melt and all the material is compressed and thrust forwards by an extrusion screw, of a conventional type and therefore not shown in the drawing, which is inside the cylindrical extruder 14.

The temperature is then progressively varied and controlled automatically, sector by sector, by means of thermocouple sensors connected to heat regulators controlled by a control unit 21, for example of the PLC type, and respectively electric resistors to heat the different sectors of the cylindrical extruder 14. Centrifugal fans 16 are provided to cool the cylindrical extruder 14, using air.

The choice of the working temperature in each sector of the cylindrical extruder 14 is defined according to the shear rate which is generated between the cylinder and the extrusion screw located inside thereof and the rheological curves of the polymers involved in the process.

In this way, the melted material reaches the correct fluidity to be able to pass through the head 22 of the extrusion device 11 and be extruded in a tubular shape; the diameter and thickness is regulated by the introduction of air inside the tube of film 20 being formed and by the drawing speed.

The inflated ball is cooled at the base by a tangential flow of air, rises inside a cooling tower and along the path is bent and inflated with bellows, before reaching a drawing calender 17 located at the top of the plant 10 which completes the flattening of the tube of film which is sent back towards the bottom to the winding operations where it is wound into folds by a winding assembly 18.

We shall now give some examples of various combinations of polymers, starting from the following heterogeneous couples: LDPE and polypropylene (PP); PP and EVA/C; PVC and EVA/C; polyurethane (PU) and LDPE, PU and EVA/C, EVA/C and polyamides, from which it is possible to achieve the following combinations with three polymers (A, B and C): LDPE, PP and EVA/C; PP, EVA/C and PVC and so on.

It is obvious that modifications and additions may be made to the synthetic film 20 and relative production method as described heretofore, but these shall remain within the field and scope of this invention.

It is also obvious that, although the invention has been described with reference to a specific example, a skilled person in the art shall certainly be able to make many other equivalent forms of synthetic film and the relative production method, but these shall all remain within the field and scope of this invention.

## Claims

1. Synthetic film suitable to be used in agriculture, advantageously as a cover in greenhouse cultivation, characterized in that it comprises a base layer consisting of at least two heterogeneous polymers having different molecular structures which cannot be combined from a molecular point of view, but which can be amalgamated due to their rheological characteristics.

2. Film as in Claim 1, characterized in that said polymers are not homogeneous in the amorphous stage and therefore in said layer there is a plurality of domains with different density and/or viscosity, so that the diffusion of the light passing through said layer is suitable to be modified due to the phenomenon of diffraction associated with said domains.

3. Film as in Claim 1, characterized in that said polymers belong to different chemical classes, but are not suitable to react chemically together.

4. Film as in Claim 1, characterized in that said polymers belong to the same chemical class but have very different rheological characteristics.

5. Film as in Claim 4, characterized in that said rheological characteristics comprise the average molecular weight of each of said polymers, which are very different from each other.

6. Film as in Claim 4, characterized in that said rheological characteristics comprise the steric conformation of said polymers, which may be different given the same chemical formula.

7. Film as in any claim hereinbefore, characterized in that a first pair of said heterogeneous polymers which can be mutually associated comprises low density polyethylene (LDPE) and polypropylene (PP).

8. Film as in any claim from 1 to 6 inclusive, characterized in that a second pair of said heterogeneous polymers which can be mutually associated comprises polypropylene (PP) and a copolymer of ethylene vinyl acetate (EVA/C).

9. Film as in any claim from 1 to 6 inclusive, characterized in that a third pair of said heterogeneous polymers which can be mutually associated comprises polyvinylchloride (PVC) and a copolymer of ethylene vinyl acetate (EVA/C).

10. Film as in any claim from 1 to 6 inclusive, characterized in that a fourth pair of said heterogeneous polymers which can be mutually associated comprises polyurethane (PU) and a low density polyethylene (LDPE).

11. Film as in any claim from 1 to 6 inclusive, characterized in that a fifth pair of said heterogeneous polymers which can be mutually associated comprises polyurethane (PU) and a copolymer of ethylene vinyl acetate (EVA/C).

12. Film as in any claim from 1 to 6 inclusive, characterized in that a sixth pair of said heterogeneous polymers which can be mutually associated comprises a copolymer of ethylene vinyl acetate (EVA/C) and a polyamide.

13. Film as in any claim hereinbefore, characterized in that the percentages of said two polymers are variable between 10 and 90%, respectively 90 and 10%, advantageously between 20 and 80%, respectively 80 and 20%.

14. Film as in any claim hereinbefore, characterized in that at least a further heterogeneous polymer is suitable to be mixed with said two polymers.

15. Film as in any claim hereinbefore, characterized in that the melting temperatures of said polymers are different from each other but within a field of acceptability varying between 5 and 50°, advantageously between 10 and 40°K.

16. Film as in any claim hereinbefore, characterized in that the rheological characteristics of said polymers, described by the respective MFI ("Melt Flow Index") or by curves of apparent viscosity according to the shear rate, are such that the ratio of the indices or the values of apparent viscosity is between 1 and 100, advantageously between 1.5 and 20.

17. Film as in any claim hereinbefore, characterized in that at least a second layer is associated with said basic layer to define a multi-layer structure.

18. Method to produce a synthetic film as in any claim hereinbefore, characterized in that each of said heterogeneous polymers is set moving towards an extrusion head (22) of an extrusion device (11) by feed means (14) provided with heating means suitable to heat said polymers to a particular temperature, near the melting temperature of the polymer which has the lower melting point, so that said polymers are suitable to be amalgamated, remaining distinct and not combining together chemically.

19. Method as in Claim 18, characterized in that the extrusion conditions of said extrusion device (11) are such as not to cause the formation of separate phases consisting of each of said pure polymers, but rather enriched domains of each of said polymers with variable gradients of concentration, but without lines and surfaces of phase separation, or local variations in the thickness of said film.

20. Method as in Claim 18, characterized in that said feed means (14) comprise a screw to feed said polymers towards said extrusion head (22), the speed of rotation of said screw and the profiles of the temperature inside said feed means (14) being a function of the formula characteristics of the pre-selected mixture of polymers.

21. Method as in Claim 18, characterized in that at least a second layer is associated with said basic layer to define a multi-layer structure of said film.
